# EUROPEAN PATENT APPLICATION

(11) **EP 4 755 228 A1**
(43) Date of publication of application: **10.06.2026**
(21) Application number: 24849471.8
(22) Date of filing: 24.07.2024
(51) Int. Cl.: A24F 40/57, A24F 40/90, A24F 40/95, A24F 40/46, A24F 40/40, A24F 40/42, A24F 40/50

(54) **AEROSOL-GENERATING DEVICE AND OPERATING METHOD THEREFOR**

(30) Priority: 31.07.2023 KR 20230099865; 21.11.2023 KR 20230162714
(71) Applicant: KT&G Corporation, Daedeok-gu Daejeon 34337 (KR)
(72) Inventor: PARK, Ju Eon, Seongnam-si, Gyeonggi-do 13597 (KR); KIM, Tae Hun, Yongin-si, Gyeonggi-do 16925 (KR); SHIN, Youn Ji, Seoul 05022 (KR); LIM, Hun Il, Seoul 05555 (KR); JUNG, Hyung Jin, Seoul 06993 (KR)
(74) Representative: AWA Sweden AB
(86) International application number: PCT/KR2024/010763
(87) International publication number: WO 2025/028902

(57) **Abstract**

An aerosol generating device according to an embodiment includes a heater configured to heat an aerosol generating article, a removable battery including at least one removable battery cell, and a control unit configured to determine a heating mode of the heater based on the number of battery cells and a coupling method between the battery cells.

## Description

### Technical Field

The disclosure relates to an aerosol generating device and an operating method therefor. Particularly, the disclosure relates to an aerosol generating device including a removable battery including at least one battery cell and an operating method therefor.

### Background Art

Recently, there has been an increasing demand for an alternative smoking method of general cigarettes. For example, there has been an increasing demand for a method of generating an aerosol by heating an aerosol generating article inside a cigarette, other than a method of generating an aerosol by burning the cigarette. Accordingly, research on heating type cigarettes or heating type aerosol generating devices is actively underway.

Aerosol generating devices may receive power from a battery for overall operations of the device and heating of a heater. Recently, countries have tended to demand eco-friendliness and stability throughout the entire life cycle of electronic devices including batteries from battery production to recycling, to improve the global environment.

### Disclosure of Invention

### Technical Problem

The present disclosure provides an aerosol generating device capable of operating in various modes based on the number of battery cells included in a battery pack and a connection method between the battery cells and an operating method therefor.

The problems to be solved through the embodiments are not limited to the above-described problems, and the problems not mentioned may be clearly understood by one of ordinary skill in the art to which the embodiments belong from the present specification and the accompanying drawings.

### Solution to Problem

An aerosol generating device according to an embodiment includes a heater configured to heat an aerosol generating article, a removable battery comprising at least one removable battery cell, and a control unit configured to determine a heating mode of the heater based on the number of the at least one battery cell and a coupling method between the at least one battery cell.

An operating method of an aerosol generating device according to an embodiment includes detecting the number of battery cells mounted on a removable battery and a coupling method between the battery cells, and determining a heating mode of a heater based on the number of the battery cells and a coupling between the battery cells.

### Advantageous Effects of Invention

The aerosol generating device and the operating method therefor according to various embodiments of the present disclosure may operate in various modes based on the number of battery cells included in the battery pack and a connection method between the battery cells, thereby quickly generating an aerosol or increasing the use time of the device.

The effects of the embodiments are not limited to the above-described effects, and the effects not mentioned may be clearly understood by one of ordinary skill in the art to which the embodiments belong from the present specification and the accompanying drawings.

### Brief Description of Drawings

FIG. 1 is a block diagram illustrating a hardware configuration of an aerosol generating device according to an embodiment.
FIGS. 2A to 2E are diagrams illustrating embodiments of the aerosol generating device of FIG. 1 implemented in various types.
FIG. 3 is a diagram for explaining operations of a removable battery and a power management unit.
FIG. 4 is a diagram for explaining a power management unit according to an embodiment of the present disclosure.
FIG. 5 is a diagram for explaining a first mode operation of the power management unit according to the embodiment of FIG. 4.
FIG. 6 is a diagram for explaining a second mode operation of the power management unit according to the embodiment of FIG. 4.
FIG. 7 is a diagram for explaining a third mode operation of the power management unit according to the embodiment of FIG. 4.
FIG. 8 is a diagram for explaining a power management unit according to another embodiment of the present disclosure.
FIG. 9 is a flowchart illustrating an operating method of an aerosol generating device according to an embodiment.

### Mode for the Invention

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

Hereinafter, the present disclosure will now be described more fully with reference to the accompanying drawings, in which exemplary embodiments of the present disclosure are shown such that one of ordinary skill in the art may easily work the present disclosure. The disclosure can, however, be embodied in many different forms and should not be construed as being limited to the embodiments set forth herein.

Hereinafter, embodiments of the present disclosure will be described in detail with reference to the drawings.

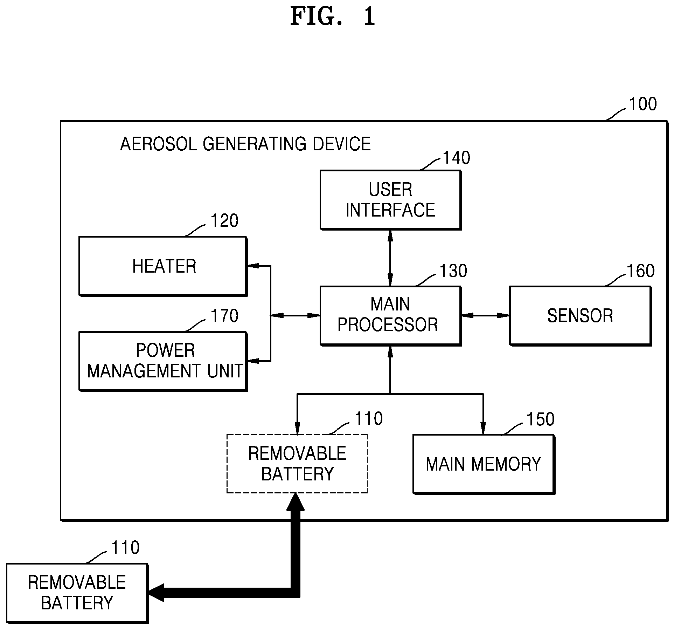

FIG. 1 is a block diagram illustrating a hardware configuration of an aerosol generating device according to an embodiment.

Referring to FIG. 1, an aerosol generating device 100 may include a removable battery 110, a heater 120, a main processor 130, a user interface 140, a main memory 150, a sensor 160, and a power management unit 170. However, hardware components inside the aerosol generating device 100 are not limited to those illustrated in FIG. 1. It may be understood by one of ordinary skill in the technical field related to the present embodiment that some of the hardware configurations shown in FIG. 1 may be omitted or new configurations (e.g., a connecting port, another communication module, etc.) may be further added according to the design of the aerosol generating device 100.

Hereinafter, an operation of each of the components included in the aerosol generating device 100 will be described without limiting a space in which each of the components is located.

The removable battery 110 supplies power used to operate the aerosol generating device 100. For example, the removable battery 110 may supply power so that the heater 120 may be heated. In addition, the removable battery 110 may supply power necessary for the operations of the other hardware components included in the aerosol generating device 100, that is, the heater 120, the main processor 130, the user interface 140, the main memory 150, the sensor 160, or the battery management unit 170. The removable battery 110 may be, for example, a lithium polymer (LiPoly) battery or a lithium ion battery, but is not limited thereto.

The removable battery 110 is a replaceable type power source, and may be mounted on a battery accommodation portion provided in the aerosol generating device 100 or may be removed from the battery accommodation portion. When an electrical contact portion is provided in the removable battery 110, and the removable battery 110 is mounted on the aerosol generating device 100, the electrical contact portion of the removable battery 110 may be electrically connected to an electrical contact portion provided in the aerosol generating device 100 and implemented to supply power to the aerosol generating device 100. As another example, a charging coil supplying power to the aerosol generating device 100 in a wireless charging method may be provided in the removable battery 110, instead of a separate electrical contact portion. That is, the power supply method of the removable battery 110 may vary, and the electrical connection method between the removable battery 110 and the aerosol generating device 100 may be different according to the power supply method supported by the removable battery 110.

The removable battery 110 may include a charger interface that may be connected to an external charger. Power for charging the removable battery 110 through the charger interface may be provided to the removable battery 110. The removable battery 110 may be charged by the external charger while being coupled to the aerosol generating device 100 or being uninstalled from the aerosol generating device 100.

The removable battery 110 may include at least one battery cell. The battery cell may have different electrodes formed at both ends in a longitudinal direction, and may be formed in a cylindrical shape. However, the shape of the battery cell is not limited thereto. For example, the battery cell may be formed in a prismatic type or a pouch type.

The heater 120 receives power from the removable battery 110 by the control of the main processor 130. The heater 120 may heat a cigarette inserted into the aerosol generating device 100 or heat a cartridge mounted on the aerosol generating device 100 by using the power supplied from the removable battery 110. That is, the heater 120 may generate an aerosol by heating an aerosol generating material provided in the cigarette or the cartridge.

The heater 120 may be located in a body of the aerosol generating device 100. Alternatively, when the aerosol generating device 100 includes the body and the cartridge, the heater 120 may be located in the cartridge. When the heater 120 is located in the cartridge, the heater 120 may receive power from the removable battery 110 located in the body.

The heater 120 may be implemented as an electrical resistance heating type heater including an electrical resistance material. For example, the electrical resistance material may be a metal or a metal alloy including titanium, zirconium, tantalum, platinum, nickel, cobalt, chromium, hafnium, niobium, molybdenum, tungsten, tin, gallium, manganese, iron, copper, stainless steel, nichrome, etc., but is not limited thereto. The heater 120 may be implemented as a metal wire, a metal plate on which an electrically conductive track is disposed, a ceramic heating element, etc., but is not limited thereto.

The heater 120 may be implemented as an induction heating type heater. The heater 120 may correspond to a heater assembly implemented as a set of an electrically conductive coil and a susceptor for heating the cigarette or the cartridge by induction heating.

The heater 120 may heat the cigarette inserted into the accommodation space provided in the aerosol generating device 100. As the cigarette is accommodated in the accommodation space of the aerosol generating device 100, the heater 120 may be located inside and/or outside the cigarette. Accordingly, the heater 120 may generate the aerosol by heating the aerosol generating material in the cigarette.

Meanwhile, the heater 120 may be implemented as a coil heater provided only in the cartridge. The cartridge may include a coil heater, a liquid transfer element, and a liquid storage to transfer an aerosol generating material accommodated in the liquid storage through the liquid transfer element, and the coil heater may generate an aerosol by heating the aerosol generating material absorbed in the liquid transfer element. For example, when the heater 120 is the coil heater, the heater 120 may include a material such as nickel chromium and be wound around the liquid transfer element or disposed adjacent to the liquid transfer element.

The main processor 130 is hardware that controls the overall operations of the aerosol generating device 100. The main processor 130 may include at least one processing unit, such as a micro controller unit (MCU). The main processor 130 may be implemented as an array of a plurality of logic gates, or may be implemented as a combination of a general-purpose microprocessor and a memory in which a program executable in the microprocessor is stored. In addition, it may be understood by one of ordinary skill in the technical field to which the present embodiment belongs that the main processor 130 may be implemented as other types of hardware.

The main processor 130 may analyze a sensing result obtained by the sensor 160 and control subsequent processes to be performed based on the sensing result. The main processor 130 according to an embodiment may determine a coupling method between battery cells based on the sensing result obtained by the sensor 160. For example, the sensor 160 may be a humidity detection sensor. At this time, the humidity detection sensor may be any one of an electric resistance type, a capacitance type, and an optical type. The main processor 130 may determine whether the cigarette inserted into the aerosol generating device 100 is a normal cigarette having a moisture content less than a preset threshold or an over-humidified cigarette having a moisture content greater than or equal to the preset threshold, by using the humidity detection sensor. When a plurality of battery cells are mounted on the removable battery 110, the main processor 130 may connect the plurality of battery cells in parallel when it is determined that the inserted cigarette is the normal cigarette, and connect the plurality of battery cells in series when it is determined that the inserted cigarette is the over-humidified cigarette.

However, a method of determining the coupling method of the battery cells mounted on the removable battery 110 is not limited thereto. For example, when it is detected that the plurality of battery cells are mounted on the removable battery 110, the user interface 140 may display a message checking whether to connect the plurality of battery cells in series or in parallel on a display. A user of the aerosol generating device 100 may determine the coupling method of the plurality of battery cells mounted on the removable battery 110 by responding to the message.

The main processor 130 may analyze a sensing result obtained by the sensor 160 and control subsequent processes to be performed based on the sensing result. For example, the main processor 130 may control the power supplied to the heater 120 so that the operation of the heater 120 starts or ends based on the sensing result obtained by the sensor 160. In addition, the main processor 130 may control the amount of power supplied to the heater 120 and the time when the power is supplied so that the heater 120 may be heated to a certain temperature or maintained at an appropriate temperature based on the sensing result obtained by the sensor 160.

The main processor 130 may control the operation of the heater 120 based on a previously stored temperature profile. In addition, the main processor 130 may control the temperature of the heater 120 after sensing a puff of the user by using a puff sensor in the sensor 160. In addition, the main processor 130 may count the number of puffs by using the puff sensor and then stop supplying power to the heater 120 when the number of puffs reaches a preset number.

The main processor 130 may control the user interface 140 based on the sensing result. For example, when the number of puffs reaches the preset number after counting the number of puffs by using the puff sensor, the main processor 130 may use a lamp, a motor, or a speaker to notify the user that the aerosol generating device 100 will soon end.

Meanwhile, the main processor 130 may determine a heating mode of the heater 120 based on the number of battery cells included in the removable battery 110 and the connection method between the battery cells.

The user interface 140 may provide information about the state of the aerosol generating device 100 to the user. The user interface 140 may include various interfacing elements such as a display or a lamp that outputs visual information (UI screen), a motor that outputs tactile information, a speaker that outputs sound information, input/output (I/O) interfacing elements (e.g., a button or a touch screen) that receive information input from the user or output information to the user, and terminals for receiving charging power.

The main memory 150 is hardware that stores various types of data processed in the aerosol generating device 100, and may store data processed and data to be processed by the main processor 130. The main memory 150 may be implemented in various types such as random access memory (RAM), such as dynamic random access memory (DRAM) and static random access memory (SRAM), read-only memory (ROM), and electrically erasable programmable read-only memory (EEPROM).

Various types of information such as the operation time of the aerosol generating device 100, the maximum number of puffs, a temperature profile, smoking information of the user, information for battery authentication, etc. may be stored in the main memory 150.

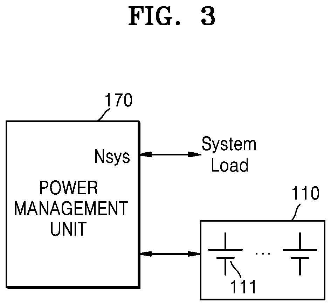

The power management unit 170 may change the output level and capacity of the removable battery 110 by changing the coupling method between the battery cells mounted on the removable battery 110 by the control of the main processor 130. This will be described in more detail with reference to FIGS. 3 to 7 below.

Meanwhile, although not shown in FIG. 1, the aerosol generating device 100 may configure an aerosol generating system together with a separate cradle. For example, the cradle may be used to charge the removable battery 110 of the aerosol generating device 100 while storing the aerosol generating device 100. That is, while the aerosol generating device 100 of the cradle is accommodated in an accommodation space inside the cradle, the cradle may be a dedicated device only for the aerosol generating device 100 to receive power from a battery of the cradle and charge the removable battery 110 of the aerosol generating device 100.

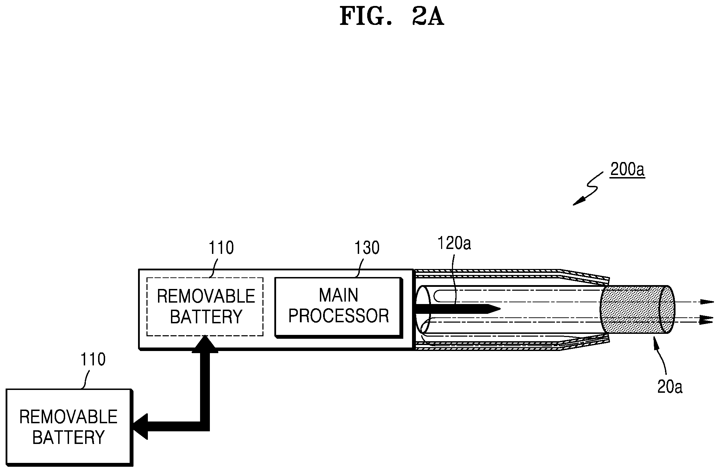

FIGS. 2A through 2E are diagrams illustrating embodiments of the aerosol generating device of FIG. 1, which is implemented in various types. Referring to FIGS. 2A through 2E, the aerosol generating device 100 may be implemented as various types of aerosol generating devices 200a through 200e using an electrically resistive heating method or an induction heating method, a method that additionally includes a vaporizer, a cartridge method, or the like. FIGS. 2A through 2E only show some elements to describe the types of aerosol generating devices 200a through 200e, and other general elements may be further included in the aerosol generating devices 200a through 200e in addition to the elements shown in FIGS. 2A through 2E.

In FIGS. 2A through 2E, the removable battery 110, heaters 120a through 120e, and the main processor 130 are components respectively corresponding to the removable battery 110, the heater 120, and the main processor 130 of FIG. 1, which may perform functions of the removable battery 110, the heater 120, and the main processor 130 described above in FIG. 1.

FIG. 2A is a diagram to describe an aerosol generating device 200a in an electrically resistive method, according to an embodiment. The aerosol generating device 200a may be a type of the aerosol generating device 100.

Referring to FIG. 2A, the aerosol generating device 200a may include the removable battery 110, a heater 120a, and the main processor 130.

A cigarette 20a may be inserted into an accommodation space inside the aerosol generating device 200a. When the cigarette 20a is inserted into the aerosol generating device 200a, the aerosol generating device 200a may generate aerosols from the cigarette 20a by heating the cigarette 20a by using the heater 120a. Because the generated aerosols are delivered to the user by passing through the cigarette 20a, the user may smoke the cigarette 20a.

The heater 120a may be heated by power supplied from the removable battery 110. The heater 120a may be an electrically resistive heater. For example, the heater 120a may include an electrically conductive track, and the heater 120a may be heated when currents flow through the electrically conductive track.

The electrically conductive track of the heater 120a may be made of an electrically resistive material and a heating temperature thereof may be determined according to power consumption of resistance, and a resistance value of the electrically conductive track may be set based on the power consumption of resistance of the electrically conductive track. The resistance value of the electrically conductive track may be variously set according to a configuring material, length, width, thickness, pattern, or the like of the electrically resistive material.

The electrically conductive track may have an internal resistance level that increases as temperature increases, according to a resistance temperature coefficient characteristic. For example, in a certain temperature range, the temperature of the electrically conductive track and the size of resistance may be proportional. By using such a principle, the heater 120a made of the electrically conductive track may heat the cigarette 20a in the electrically resistive method.

The electrically conductive track may be made of tungsten, gold, platinum, silver copper, nickel palladium, or a combination thereof. Also, the electrically conductive track pattern may be doped with a suitable dopant and may include an alloy.

The shape of the heater 120a may be manufactured in various ways, such as a tube shape, a plate shape, a needle shape, a rod shape, or the like. In addition, the heater 120a may be arranged with a plurality of heaters. The heater 120a may be used in an internal heating method of heating the inside of the cigarette 20a by being inserted into the interior of the cigarette 20a.

The removable battery 110 may be separated from or mounted in the aerosol generating device 200a. When the removable battery 110 is mounted in the aerosol generating device 200a, power may be supplied to the heater 120a from the removable battery 110 to control the temperature of the electrically conductive track to perform a heating operation of the heater 120a.

The main processor 130 may control the heating operation of the heater 120a by controlling the power supplied to the heater 120a. For example, the main processor 130 may control a temperature at which the cigarette 20a is heated by the heater 120a, according to a temperature profile.

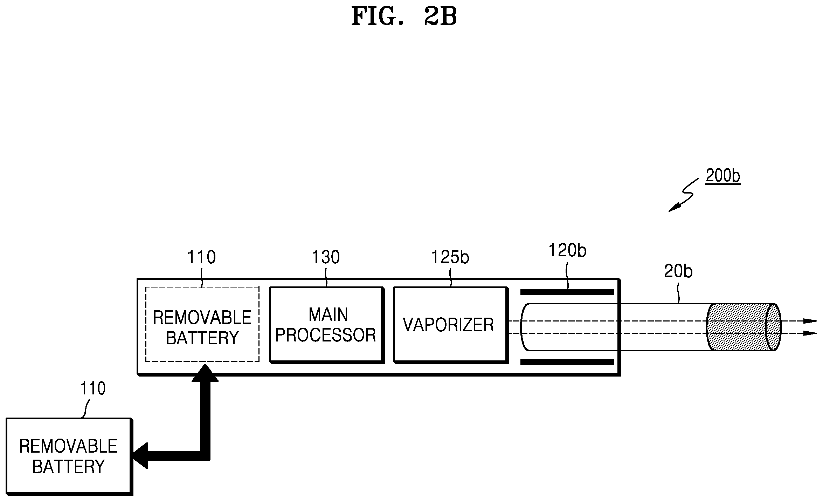

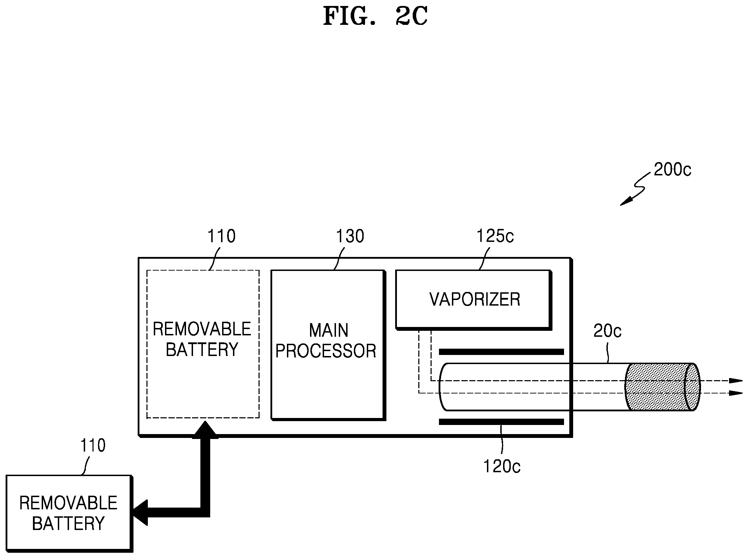

FIGS. 2B and 2C are diagrams to describe aerosol generating devices 200b and 200c additionally including vaporizers 125b and 125c, respectively, according to embodiments. Each of the aerosol generating devices 200b and 200c may be a type of the aerosol generating device 100.

Referring to FIGS. 2B and 2C, the aerosol generating devices 200b and 200c further include the vaporizers 125b and 125c, respectively. Cigarettes 20b and 20c may be inserted into inner spaces of the aerosol generating devices 200b and 200c, respectively.

FIG. 2B illustrates that the vaporizer 125b and a heater 120b are arranged in a row. However, FIG. 2C illustrates that the vaporizer 125c and a heater 120c are arranged in parallel. That is, the aerosol generating devices 200b and 200c may be distinguished depending on a way the vaporizer 125b is arranged.

The heaters 120b and 120c may be heated by power supplied from the removable battery 110. The heaters 120b and 120c are electrically resistive heaters and may include, for example, electrically conductive tracks.

Unlike the heater 120a described with reference to FIG. 2A, the heaters 120b and 120c in FIGS. 2B and 2C may be implemented in an external heating method of heating outer surfaces of the cigarettes 20b and 20c by being arranged on outer peripheries of the cigarettes 20b and 20c.

The vaporizers 125b and 125c may generate aerosols by heating a liquid composition, and the generated aerosols may pass through the cigarettes 20b and 20c to be delivered to the user. In other words, the aerosols generated by the vaporizers 125b and 125c may be transported along an air flow passage of the aerosol generating devices 200b and 200c, and the air flow passage may be configured so that the aerosols generated by the vaporizers 125b and 125c pass through the cigarettes 20b and 20c to be delivered to the user.

The vaporizers 125b and 125c may include a liquid storage unit, a liquid delivery element, and a heating element (or a vaporizing element). However, each of the liquid storage unit, the liquid delivery element, and the heating element is an independent module, which may also be arranged in other locations within the aerosol generating device 100 instead of within the vaporizers 125b and 125c.

The liquid storage unit may store a liquid composition. For example, the liquid composition may be a liquid including a tobacco-containing material having a volatile tobacco flavor component, or a liquid including a non-tobacco material. The liquid storage unit may be formed to be detached/attached from/to the vaporizers 125b and 125c or may be formed integrally with the vaporizers 125b and 125c. For example, the liquid composition may include water, a solvent, ethanol, plant extract, spices, flavorings, or a vitamin mixture. Also, the liquid composition may include an aerosol forming agent, such as glycerin and propylene glycol.

The liquid delivery element may deliver the liquid composition of the liquid storage unit to the heating element. For example, the liquid delivery element may be a wick such as cotton fiber, ceramic fiber, glass fiber, or porous ceramic, but is not limited thereto.

The heating element provided in the vaporizers 125b and 125c is an element configured to heat (vaporize) the liquid composition delivered by the liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, aerosols may be generated. Accordingly, the vaporizers 125b and 125c may also be referred to as in other terms such as cartomizers or atomizers.

The removable battery 110 may be separated from or mounted in the aerosol generating devices 200b and 200c. When the removable battery 110 is mounted in the aerosol generating devices 200b and 200c, power may be supplied to the heaters 120b and 120c and the vaporizers 125b and 125c from the removable battery 110 to perform heating operations of the heaters 120b and 120c and the vaporizers 125b and 125c.

The main processor 130 may control the heating operations of the heaters 120b and 120c and the vaporizers 125b and 125c by controlling power supplied to the heaters 120b and 120c and the vaporizers 125b and 125c. For example, the main processor 130 may control temperatures at which the cigarettes 20b and 20c are heated by the heaters 120b and 120c and the vaporizers 125b and 125c, according to temperature profiles.

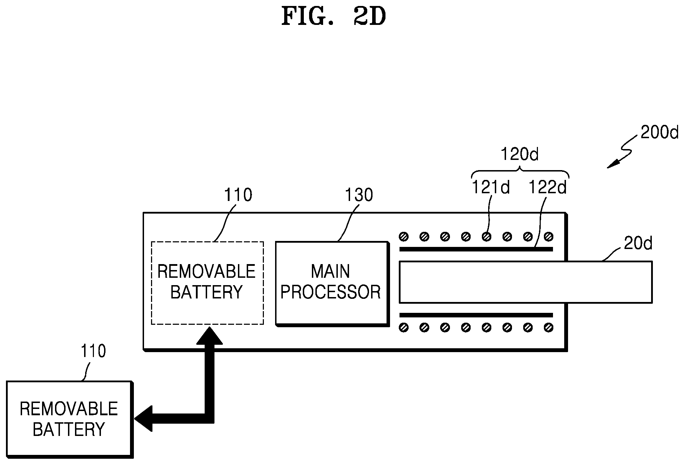

FIG. 2D is a diagram to describe an aerosol generating device 200d in an induction heating method, according to an embodiment. The aerosol generating device 200d may be a type of the aerosol generating device 100.

Referring to FIG. 2D, the aerosol generating device 200d may include a heater 120d including a coil 121d and a susceptor 122d, the removable battery 110, and the main processor 130.

The aerosol generating device 200d may generate aerosols by heating a cigarette 20d accommodated in the aerosol generating device 200d in an induction heating method. The induction heating method may refer to a method of heating a magnetic body by applying an alternating magnetic field, which has a periodically changing direction, to the magnetic body generating heat by an external magnetic field. Accordingly, the aerosol generating device 200d may release thermal energy from the magnetic body by applying the alternating magnetic field to the magnetic body, and may transfer the thermal energy released from the magnetic body to the cigarette 20d, thereby heating the cigarette 20d. Here, the magnetic body generating heating by an external magnetic field may be the susceptor 122d. The susceptor 122d may be provided in the aerosol generating device 200d. Alternatively, the susceptor 122d may also be provided inside the cigarette 20d in the shape of a piece, thin plate, strip, or the like, instead of being provided in the aerosol generating device 200d.

The susceptor 122d may include a ferromagnetic substance. For example, the material of the susceptor 122d may include metal or carbon. The material of the susceptor 122d may include at least one of ferrite, ferromagnetic alloy, stainless steel, and aluminum (Al). Also, the material of the susceptor 122d may include at least one of a ceramic such as graphite or zirconia, a transition metal such as nickel (Ni) or cobalt (Co), and a metalloid such as boron (B) or phosphorus (P).

The aerosol generating device 200d may accommodate the cigarette 20d. A space accommodating the cigarette 20d may be formed in the aerosol generating device 200d. The susceptor 122d may be arranged around the periphery of the space that accommodates the cigarette 20d. For example, the susceptor 122d may have a cylindrical shape surrounding the outside of the cigarette 20d. Accordingly, when the cigarette 20d is accommodated in the aerosol generating device 200d, the cigarette 20d may be accommodated in an accommodation space of the susceptor 122d, and the susceptor 122d may be arranged at a position surrounding at least a portion of an outer surface of the cigarette 20d. However, the shape of the susceptor 122d is not limited thereto and may vary.

As the heater 120d is in an induction heating method, the heater 120d may heat the cigarette 20d accommodated in the aerosol generating device 200d by using the susceptor 122d that generates heat by an external magnetic field generated by the coil 121d.

The coil 121d may be arranged to be wound along the outer surface of the susceptor 122d, so that an alternating magnetic field may be applied to the susceptor 122d. When power is supplied to the coil 121d from the aerosol generating device 200d, a magnetic field may be formed inside the coil 121d. When an alternating current is applied to the coil 121d, a direction of the magnetic field formed inside the coil 121d may be continuously changed. When the susceptor 122d is located inside the coil 121d and is exposed to an alternating magnetic field having a periodically changing direction, the susceptor 122d may generate heat, and a cigarette 20d accommodated in the susceptor 122d may be heated. The shape of the coil 121d may be a cylindrical shape wound along the cigarette 20d, but is not limited thereto, and the coil 121d may also be implemented in various types, such as a flat coil or the like.

The removable battery 110 may be separated from or mounted in the aerosol generating device 200d. When the removable battery 110 is mounted in the aerosol generating device 200d, for example, power may be supplied to the coil 121d to perform a heating operation of the heater 120d.

The main processor 130 may control the heating operation of the heater 120d by controlling the power supplied to the coil 121d. For example, the main processor 130 may control a temperature at which the cigarette 20d is heated by induction heating of the susceptor 122d by adjusting the intensity of a magnetic field induced by the coil 121d according to a temperature profile.

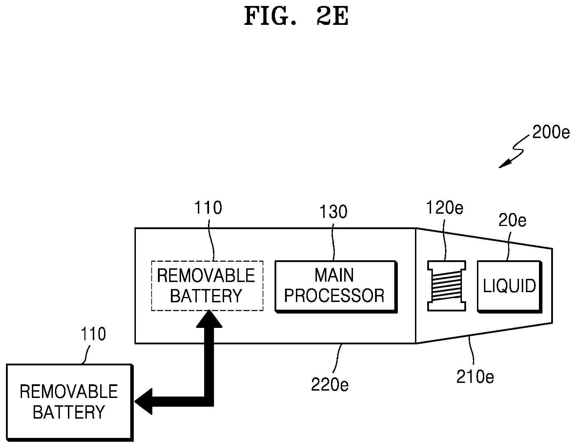

FIG. 2E is a diagram to describe an aerosol generating device 200e including a replaceable cartridge 210e containing an aerosol generating material 20e.

The aerosol generating device 200e of FIG. 2E includes the cartridge 210e containing the aerosol generating material 20e, and a body 220e supporting the cartridge 210e. The aerosol generating device 200e may correspond to a type of the aerosol generating device 100 of FIG. 1. At this time, the hardware components included in the aerosol generating device 100 of FIG. 1 may be dividedly positioned in the body 220e and the cartridge 210e.

The cartridge 210e may be coupled to the body 220e in a state in which the aerosol generating material 20e is accommodated therein. The cartridge 210e may be mounted on the body 220e by inserting a portion of the cartridge 210e into a receptacle of the body 220e.

The cartridge 210e may contain the aerosol generating material 20e of a liquid composition, but is not limited thereto, and may contain the aerosol generating material 20e in any one of a solid state, a gaseous state, or a gel state. For example, the liquid composition may be a liquid including a tobacco-containing material having a volatile tobacco flavor component, or a liquid including a non-tobacco material.

A heater 120e provided in the cartridge 210e performs a heating operation by an electrical signal or wireless signal transmitted from the body 220e. Accordingly, aerosols may be generated by vaporizing the aerosol generating material 20e inside the cartridge 210e by heating of the heater 120e.

The heater 120e may be implemented as a conductive filament or ceramic heating body including a metal material, such as copper, nickel, tungsten, or the like, to heat an aerosol generating material delivered by a liquid delivery element by generating heat through electrical resistance, and may be wound around the liquid delivery element or arranged adjacent to the liquid delivery element.

The removable battery 110 may be separated from or mounted in the aerosol generating device 200e. When the removable battery 110 is mounted in the aerosol generating device 200e, power may be supplied to the heater 120e from the removable battery 110 to perform a heating operation of the heater 120e.

The main processor 130 may control the heating operation of the heater 120e by controlling the power supplied to the heater 120e. For example, the main processor 130 may control a temperature at which the aerosol generating material 20e is heated by the heater 120e, according to a temperature profile.

Although not illustrated in FIGS. 2A through 2E, the aerosol generating devices 200a through 200e and a separate cradle may form together a system. For example, the cradle may store the aerosol generating devices 200a through 200e or perform charging of the removable battery 110 of the aerosol generating devices 200a through 200e.

According to various embodiments, the aerosol generating device 100 of FIG. 1 may be implemented as at least one of the types of the aerosol generating devices 200a through 200e of FIGS. 2A through 2E, but is not necessarily limited thereto, and may be implemented as other types.

The aerosol generating devices 200a through 200e of FIGS. 2A through 2E may commonly use the removable battery 110 as a power source. The removable battery 110 is a battery that may be replaced by mounting in or separating from the aerosol generating devices 200a through 200e.

FIG. 3 is a diagram for explaining operations of a removable battery and a power management unit.

Referring to FIG. 3, battery cells 111 according to an embodiment may be removed from the removable battery 110. To this end, the removable battery 110 may have holders on which the battery cells 111 are mounted. The number of holders may be at least one or more. For this reason, a user may selectively use the removable battery 110 having the number of holders that matches his or her device usage pattern (e.g., rapid heating, securing a long waiting time, etc.) In addition, because each of the battery cells 111 is freely removed, the entire lifespan of the removable battery 110 may be efficiently managed by replacing only the battery cell 111 that malfunctions or the battery cell 111 of which lifespan has expired.

The plurality of battery cells 111 may be electrically connected to each other in series or in parallel. For example, a parallel connection may be formed by connecting the same polarities of the adjacent battery cells 111, or a series connection may be formed by connecting opposite polarities of the adjacent battery cells 111.

When the battery cells 111 are connected in series, an output voltage may have the magnitude proportional to the number of the battery cells 111 connected in series. For example, in the case where the voltage of one battery cell 111 varies in the range of 3.5 V to 4 V according to a state of charge, when two battery cells 111 are connected in series to the removable battery 110, the output voltage of the removable battery 110 may vary in the range of 7 V to 8 V according to the state of charge. Meanwhile, when the battery cells 111 are connected in series, the total capacity may be substantially the same as the capacity of one battery cell 111. For example, when the capacity of one battery cell 111 is 3000 mA, even though two battery cells 111 are connected in series to the removable battery 110, the total capacity of the removable battery 110 may be 3000 mA.

To the contrary, when the battery cells 111 are connected in parallel, the output voltage may be substantially the same as the voltage of one battery cell 111. For example, when the voltage of one battery cell 111 varies in the range of 3.5 V to 4 V according to the state of charge, even though two battery cells 111 are connected in parallel to the removable battery 110, the output voltage of the removable battery 110 may vary in the range of 3.5 V to 4 V according to the state of charge. Meanwhile, when the battery cells 111 are connected in parallel, the total capacity may have the magnitude proportional to the number of battery cells 111 connected in parallel. For example, when the capacity of one battery cell 111 is 3000 mA, when two battery cells 111 are connected in parallel to the removable battery 110, the total capacity of the removable battery 110 may be 6000 mA.

The power management unit 170 may supply the power of the removable battery 110 to a system load. Here, the system load may be understood as a generic term for elements (e.g., the heater 120, the main processor 130, the user interface 140, the main memory 150, the sensor 160, etc. of FIG. 1) that consume power inside the aerosol generating device. In general, an integrated circuit (IC) such as a power management IC (PMIC) is connected to a system node Nsys to generate various voltages required inside the system and then provide various voltages to devices inside the system.

The power management unit 170 may connect the plurality of battery cells 111 in series or in parallel and discharge at least one of the plurality of battery cells 111 to supply power to the system load. To this end, the power management unit 170 may include a switch network that changes a connection relationship so that the plurality of battery cells 111 are connected to each other in series or in parallel.

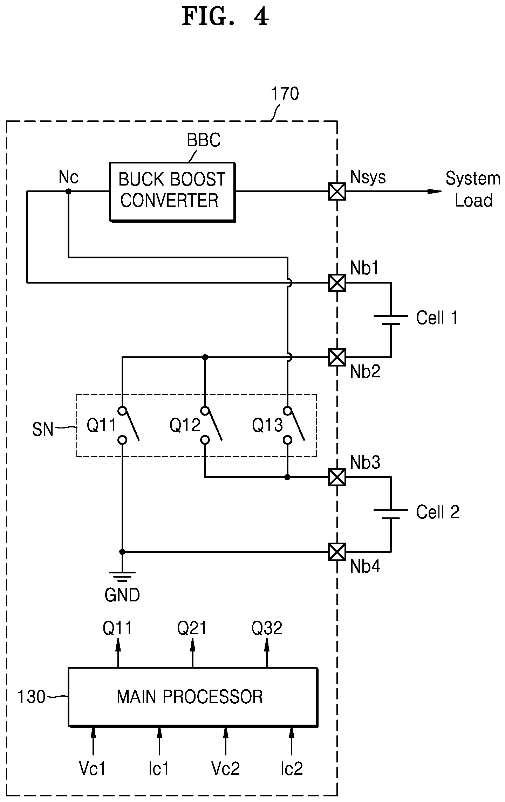

FIG. 4 is a diagram for explaining a power management unit according to an embodiment of the present disclosure.

Referring to FIG. 4, the power management unit 170 may include a switch network SN and a buck boost converter BBC.

In addition, the power management unit 170 may include a first node Nc connected to one end (or input end) of the buck boost converter BBC, the system node Nsys connected to a system load, a first cell node Nb1 connected to a positive terminal of a first battery cell Cell1 among the plurality of battery cells 111, a second cell node Nb2 connected to a negative terminal of the first battery cell Cell1 among the plurality of battery cells 111, a third cell node Nb3 connected to a positive terminal of a second battery cell Cell2 among the plurality of battery cells 111, and a fourth cell node Nb4 connected to a negative terminal of the second battery cell Cell2 among the plurality of battery cells 111.

The switch network SN may selectively connect the second cell node Nb2 to the third cell node Nb3 or the fourth cell node Nb4, and may selectively connect the third cell node Nb3 to the second cell node Nb2 or the first node Nc.

To this end, for example, the switch network SN may include a first switch Q11 disposed between the second cell node Nb2 and the fourth cell node Nb4, a second switch Q12 disposed between the second cell node Nb2 and the third cell node Nb3, and a third switch Q13 disposed between the third cell node Nb3 and the first node Nc. The fourth cell node Nb4 may be connected to a reference potential GND.

The first to third switches Q11 to Q13 included in the switch network SN may be implemented as semiconductor switching devices such as MOSFET, IGBT, MCT, and BJT.

The buck boost converter BBC may be disposed between the first node Nc and the system node Nsys to step down or up the voltage of the first node Nc and provide the voltage to the system node Nsys. A step-down converter such as a buck converter and a step-up converter such as a boost converter may be used for the buck boost converter BBC.

The main processor 130 may obtain information of at least one of a voltage Vc1 of the first battery cell Cell1, a current Ic1 of the first battery cell Cell1, a voltage Vc2 of the second battery cell Cell2, or a current Ic2 of the second battery cell Cell2 and control the operation of the switch network SN.

As described above, the power management unit 170 may provide power by connecting the plurality of battery cells 111 to the system load while switching the plurality of battery cells 111 in series or in parallel. The main processor 130 may determine a heating mode of the heater (120 in FIG. 1) based on the number of the battery cells 111 and a coupling method between the battery cells 111. For example, the heating mode may include a first mode (or standard mode) corresponding to a case where the battery cell 111 includes one battery cell, a second mode (or boost mode) corresponding to a case where the battery cells 111 include two or more battery cells and are connected in series, and a third mode (or long lifespan mode) corresponding to a case where the battery cells 111 include two or more battery cells and are connected in parallel.

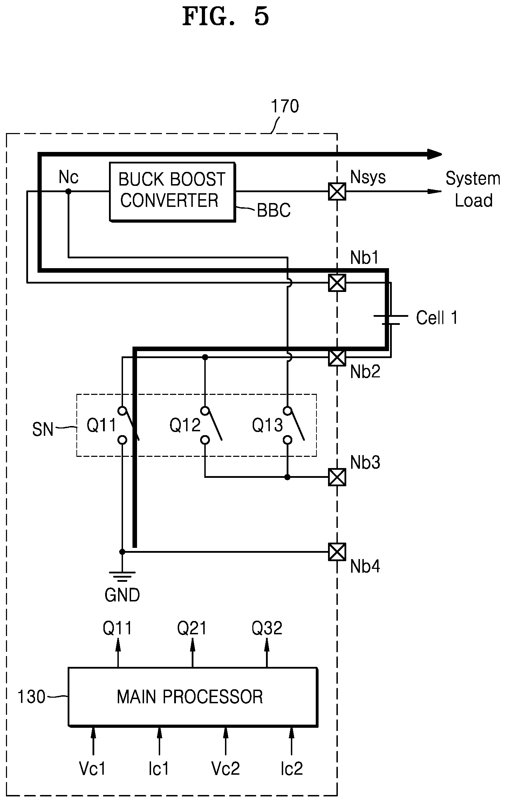

FIG. 5 is a diagram for explaining a first mode operation of the power management unit according to an embodiment of FIG. 4.

Referring to FIGS. 3 and 5, a first mode may be understood as a mode in which charged power is discharged and provided to a system load when one battery cell 111 (or first battery cell Cell 1) is mounted on the removable battery 110. For example, the first mode may be a standard mode in which the heater 120 operates with a temperature profile corresponding to a general cigarette of which moisture content is less than a preset threshold.

The power management unit 170 may provide power to the system load by discharging the first battery cell Cell1 while being connected alone. Specifically, when only information of the voltage Vc1 and the current Ic1 of the first battery cell Cell1 is obtained, the main processor 130 may control the operation of the switch network SN so that only the first switch Q11 is turned on, and the second switch Q12 and the third switch Q13 are turned off. The first switch Q11 may be turned on so that the second cell node Nb2 and the fourth cell node Nb4 may be connected to each other.

By such a switch operation, the voltage of the first battery cell Cell1 may be provided as an input voltage to an input terminal (or the first node Nc) of the buck boost converter BBC. The buck boost converter BBC may provide the input voltage to the system node Nsys as the output voltage when the input voltage matches a preset output level. To the contrary, the buck boost converter BBC may step down or up the input voltage when the input voltage does not match the preset output level, change the input voltage to the preset output level, and then provide the input voltage to the system node Nsys as the output voltage. At this time, the buck boost converter BBC may adjust an output range through a program such as I2C communication.

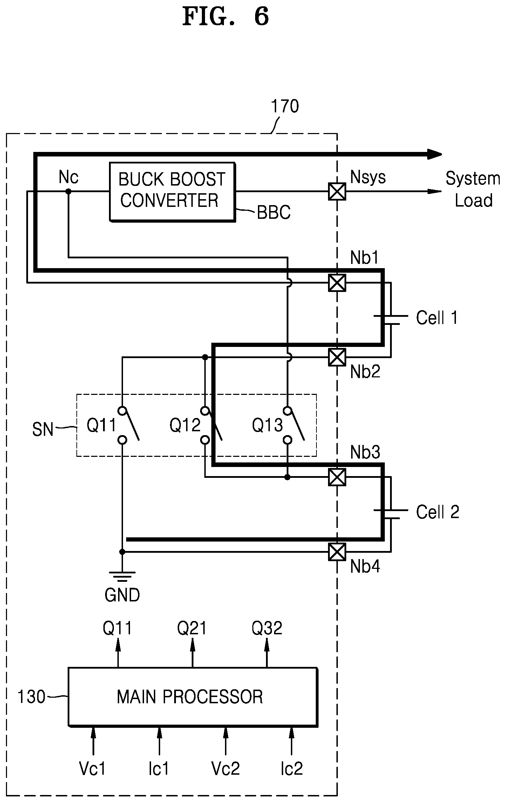

FIG. 6 is a diagram for explaining a second mode operation of the power management unit according to an embodiment of FIG. 4.

Referring to FIGS. 3 and 6, a second mode may be understood as a mode in which charged power is discharged and provided to a system load when two battery cells 111 are mounted on the removable battery 110, and the first battery cell Cell1 and the second battery cell Cell2 are connected in series. For example, the second mode may be a boost mode in which the heater 120 operates with a temperature profile corresponding to an over-humidified cigarette having a moisture content greater than or equal to a preset threshold.

The power management unit 170 may discharge power and provide the power to the system load while the first battery cell Cell1 and the second battery cell Cell2 are connected in series. Specifically, the main processor 130 may obtain information about the voltage Vc1 of the first battery cell Cell1, the current Ic1 of the first battery cell Cell1, the voltage Vc2 of the second battery cell Cell2, and the current Ic2 of the second battery cell Cell2, and when it is determined that the first battery cell Cell1 and the second battery cell Cell2 are connected in series, may control the operation of the switch network SN so that only the second switch Q12 is turned on, and the first switch Q11 and the third switch Q13 are turned off. The second switch Q12 may be turned on so that the second cell node Nb2 and the third cell node Nb3 may be connected to each other.

By such a switch operation, a voltage having the magnitude obtained by summing the voltage of the first battery cell Cell1 and the voltage of the second battery cell Cell2 may be provided as an input voltage to an input terminal (or the first node Nc) of the buck boost converter BBC. The buck boost converter BBC may operate as a buck converter in the second mode. In other words, the buck boost converter BBC may step down the input voltage in the second mode and generate an output voltage. For example, in the case where each of the voltage of the first battery cell Cell1 and the voltage of the second battery cell Cell2 has a range of about 3.5 V to 4 V, when two battery cells 111 are connected in series to the removable battery 110, the input voltage of the removable battery 110 may have a range of about 7 V to 8 V. The magnitude of the voltage in the boost mode may correspond to 120 % of the magnitude of the voltage in a standard mode. Therefore, the buck boost converter BBC may step down the input voltage so that the magnitude of the input voltage increased twice the magnitude of the voltage of one battery cell 111 may have the magnitude of 1.2 times the magnitude of the voltage of one battery cell 111. That is, the buck boost converter BBC may step down the input voltage, generate the output voltage and then provide the output voltage to the system node Nsys.

Meanwhile, when the first battery cell Cell1 and the second battery cell Cell2 are connected in series, the total capacity may be substantially the same as the capacity of one battery cell 111. For example, when the capacity of the first battery cell Cell 1 is 3000 mA, even though two battery cells 111 are connected in series to the removable battery 110, the total capacity of the removable battery 110 may be 3000 mA.

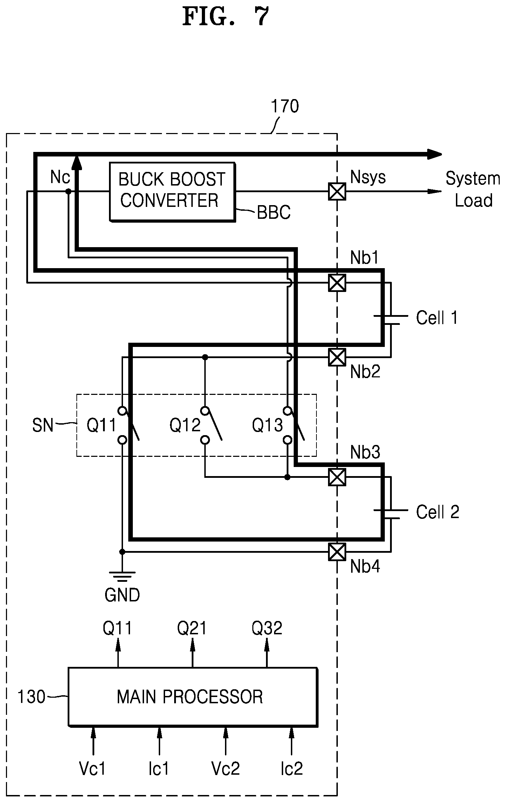

FIG. 7 is a diagram for explaining a third mode operation of the power management unit according to an embodiment of FIG. 4.

Referring to FIGS. 3 and 7, a third mode may be understood as a mode in which charged power is discharged and provided to a system load when two battery cells 111 are mounted on the removable battery 110, and the first battery cell Cell1 and the second battery cell Cell2 are connected in parallel. For example, the third mode may be a long lifespan mode in which the heater 120 operates in a standard mode due to a long waiting time, such as when charging is impossible for a long time, like a travel, but secures a large capacity of a battery.

The power management unit 170 may discharge power and provide the power to the system load while the first battery cell Cell1 and the second battery cell Cell2 are connected in parallel. Specifically, the main processor 130 may obtain information about the voltage Vc1 of the first battery cell Cell1, the current Ic1 of the first battery cell Cell1, the voltage Vc2 of the second battery cell Cell2, and the current Ic2 of the second battery cell Cell2, and when it is determined that the first battery cell Cell1 and the second battery cell Cell2 are connected in parallel, may control the operation of the switch network SN so that the first switch Q11 and the third switch Q13 are turned on and the second switch Q12 is turned off. The first switch Q11 may be turned on so that the second cell node Nb2 and the fourth cell node Nb4 may be connected to each other, and the third switch Q13 may be turned on so that the first node Nc and the third cell node Nb3 may be connected to each other.

By such a switch operation, a voltage corresponding to the voltage of the first battery cell Cell1 (or voltage of the second battery cell Cell2) may be provided as an input voltage to an input terminal (or the first node Nc) of the buck boost converter BBC. The buck boost converter BBC may provide the input voltage to the system node Nsys as the output voltage when the input voltage matches a preset output level. To the contrary, the buck boost converter BBC may step down or up the input voltage when the input voltage does not match the preset output level, change the input voltage to the preset output level, and then provide the input voltage to the system node Nsys as the output voltage.

Meanwhile, when the first battery cell Cell1 and the second battery cell Cell2 are connected in parallel, the total capacity may have the magnitude proportional to the number of the battery cells 111 connected in parallel. For example, in the case where the capacity of the first battery cell Cell1 is 3000 mA, when two battery cells 111 are connected in parallel to the removable battery 110, the total capacity of the removable battery 110 may be 6000 mA.

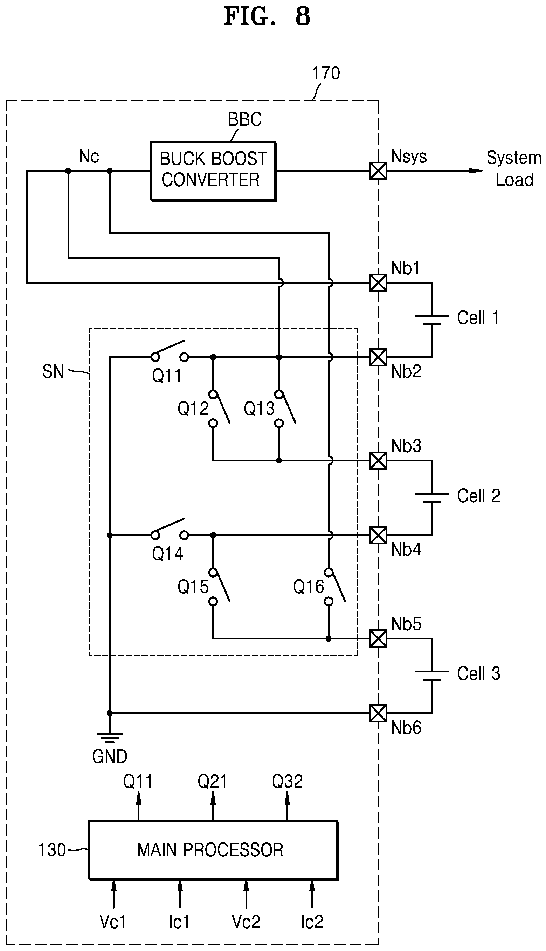

FIG. 8 is a diagram for explaining a power management unit according to another embodiment of the present disclosure.

Referring to FIGS. 3, 4, and 8, the removable battery 110 is different from the embodiment of FIG. 4 in that the removable battery 110 includes the first to third battery cells Cell1, Cell2, and Cell3, and the switch network SN of the power management unit 170 corresponds to the first to third battery cells Cell1, Cell2, and Cell3.

For example, the switch network SN of the power management unit 170 may include the first switch Q11 and the second switch Q12 selectively connecting s negative terminal of the first battery cell Cell1 to a positive terminal (or the third cell node Nb3) of the second battery cell Cell2 or the reference potential GND, the third switch Q13 selectively connecting the positive terminal (or the third cell node Nb3) of the second battery cell Cell2 to the system node Nsys, a fourth switch Q14 and a fifth switch Q15 selectively connecting a negative terminal (or the fourth cell node Nb4) of the second battery cell Cell2 to a positive terminal (or the fifth cell node Nb5) of the third battery cell Cell3 or the reference potential GND, and a sixth switch Q16 selectively connecting the positive terminal (or the fifth cell node Nb5) of the third battery cell Cell3 to the system node Nsys.

Due to such a configuration of the switch network SN, the power management unit 170 may connect the first to third battery cells Cell1, Cell2, and Cell3 in series or in parallel in first to third modes and discharge power.

Hereinafter, the other embodiments will be described. In the following embodiment, the description of the same configuration as that of the embodiment described above will be omitted or simplified, and differences will be mainly described.

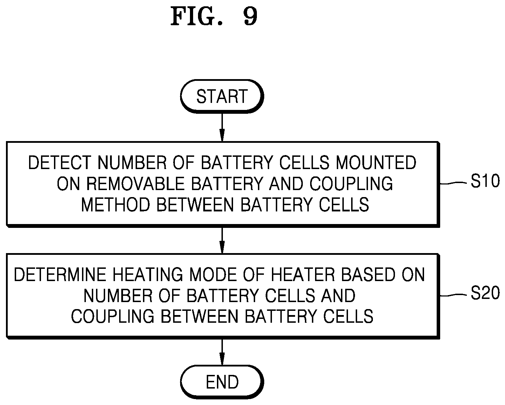

FIG. 9 is a flowchart illustrating an operating method of an aerosol generating device according to an embodiment.

Referring to FIGS. 1 to 9, the operating method the aerosol generating device according to an embodiment may include operation S10 of detecting the number of the battery cells 111 mounted on the removable battery 110 and a coupling method between the battery cells 111, and operation S20 of determining a heating mode of the heater 120 based on the number of the battery cells 111 and the coupling method between the battery cells 111.

Specifically, in operation S10, the main processor 130 may obtain voltage and current information of the battery cells 111, and based on the obtained information, detect the number of the battery cells 111 mounted on the removable battery 110 and the coupling method between the battery cells 111.

The aerosol generating device 100 may include the power management unit 170 including the switch network SN changing the coupling method between the battery cells 111 and the buck boost converter BBC capable of increasing or decreasing an output level.

The main processor 130 may obtain information of at least one of the voltage Vc1 of the first battery cell Cell1, the current Ic1 of the first battery cell Cell1, the voltage Vc2 of the second battery cell Cell2, or the current Ic2 of the second battery cell Cell2 and control the operation of the switch network SN.

The power management unit 170 may provide power by connecting the plurality of battery cells 111 to a system load while switching the battery cells 111 in series or in parallel. The main processor 130 may determine the heating mode of the heater (120 in FIG. 1) based on the number of the battery cells 111 and the coupling method between the battery cells 111. For example, the heating mode may include a first mode (or standard mode) corresponding to a case where the battery cell 111 includes one battery cell, a second mode (or boost mode) corresponding to a case where the battery cells 111 include two or more battery cells and are connected in series, and a third mode (or long lifespan mode) corresponding to a case where the battery cells 111 include two or more battery cells and are connected in parallel.

In operation S20, the main processor 130 may determine the heating mode of the heater 120 based on the number of the battery cells 111 and the coupling between the battery cells 111.

A first mode may be understood as a mode in which charged power is discharged and provided to a system load when one battery cell 111 (or first battery cell Cell 1) is mounted on the removable battery 110. For example, the first mode may be a standard mode in which the heater 120 operates with a temperature profile corresponding to a general cigarette of which moisture content is less than a preset threshold.

A second mode may be understood as a mode in which charged power is discharged and provided to the system load when two battery cells 111 are mounted on the removable battery 110, and the first battery cell Cell1 and the second battery cell Cell2 are connected in series. For example, the second mode may be a boost mode in which the heater 120 operates with a temperature profile corresponding to an over-humidified cigarette having a moisture content greater than or equal to a preset threshold.

A third mode may be understood as a mode in which charged power is discharged and provided to the system load when two battery cells 111 are mounted on the removable battery 110, and the first battery cell Cell1 and the second battery cell Cell2 are connected in parallel. For example, the third mode may be a long lifespan mode in which the heater 120 operates in the standard mode due to a long waiting time, such as when charging is impossible for a long time, like a travel, but secures a large capacity of a battery.

At this time, an output level of the removable battery 110 in the first mode may be substantially the same as an output level of the removable battery 110 in the third mode, and an output level of the removable battery 110 in the second mode may be higher than the output level of the removable battery 110 in the first mode. In addition, the capacity of the removable battery 110 in the first mode may be substantially the same as the capacity of the removable battery 110 in the second mode, and the capacity of the removable battery 110 in the third mode may be greater than the capacity of the removable battery 110 in the first mode.

Those of ordinary skill in the art pertaining to the present embodiments can understand that various changes in form and details can be made therein without departing from the scope of the characteristics described above. The disclosed methods should be considered in descriptive sense only and not for purposes of limitation. The scope of the present disclosure is defined by the appended claims rather than by the foregoing description, and all differences within the scope of equivalents thereof should be construed as being included in the present disclosure.

## Claims

1. An aerosol generating device comprising:
a heater configured to heat an aerosol generating article;
a removable battery comprising at least one removable battery cell; and
a control unit configured to determine a heating mode of the heater based on a number of the at least one battery cell and a coupling method between the at least one battery cell.

2. The aerosol generating device of claim 1, further comprising:
a power management unit including a switch portion configured to change the coupling method between the at least one battery cell; and
a buck boost converter capable of increasing or decreasing an output level.

3. The aerosol generating device of claim 2, wherein
the heating mode includes
a first mode corresponding to a case where there is one of the battery cells; a second mode corresponding to a case where there are two or more of the battery cells, and the battery cells are connected in series; and
a third mode corresponding to a case where there are two or more of the battery cells, and the battery cells are connected in parallel.

4. The aerosol generating device of claim 3, wherein
the output level in the first mode is same as the output level in the third mode, and
the output level in the second mode is higher than the output level in the first mode.

5. The aerosol generating device of claim 3, wherein
a capacity of the removable battery in the first mode is same as a capacity of the removable battery in the second mode, and
a capacity of the removable battery in the third mode is greater than the capacity of the removable battery in the first mode.

6. The aerosol generating device of claim 3, wherein
the removable battery includes
a first battery cell and a second battery cell, and
the switch portion includes
a first switch connected between a negative terminal of the first battery cell and a negative terminal of the second battery cell;
a second switch connected between the negative terminal of the first battery cell and a positive terminal of the second battery cell; and
a third switch connected between a first terminal of the buck boost converter and the positive terminal of the second battery cell.

7. The aerosol generating device of claim 6, wherein
a second terminal of the buck boost converter is connected to a system node, and
the negative terminal of the second battery cell is connected to a reference potential.

8. The aerosol generating device of claim 6, wherein
the control unit is configured to turn on the first switch, turn off the second switch, and turn off the third switch in the first mode.

9. The aerosol generating device of claim 6, wherein
the control unit is configured to turn off the first switch, turn on the second switch, and turn off the third switch in the second mode.

10. The aerosol generating device of claim 9, wherein
the buck boost converter is configured to operate as a buck converter in the second mode.

11. The aerosol generating device of claim 6, wherein
the control unit is configured to turn on the first switch, turn off the second switch, and turn on the third switch in the third mode.

12. An operating method of an aerosol generating device, the operating method comprising:
detecting a number of battery cells mounted on a removable battery and a coupling method between the battery cells; and
determining a heating mode of a heater based on the number of the battery cells and a coupling method between the battery cells.

13. The operating method of claim 12, wherein
the coupling method between the battery cells is changed using a switch portion, and
an output level of the removable battery is increased or decreased by a buck boost converter.

14. The operating method of claim 13, wherein
the heating mode includes
a first mode corresponding to a case where the battery cells are one battery cell;
a second mode corresponding to a case where the battery cells are two or more battery cells, and are connected in series; and
a third mode corresponding to a case where the battery cells are two or more battery cells, and are connected in parallel.

15. The operating method of claim 14, wherein
the output level in the first mode is same as the output level in the third mode,
the output level in the second mode is higher than the output level in the first mode,
a capacity of the removable battery in the first mode is same as a capacity of the removable battery in the second mode, and
a capacity of the removable battery in the third mode is greater than the capacity of the removable battery in the first mode.
